# EUROPEAN PATENT APPLICATION

(11) **EP 4 570 596 A1**
(43) Date of publication of application: **18.06.2025**
(21) Application number: 23217297.3
(22) Date of filing: 15.12.2023
(51) Int. Cl.: B60R 16/027

(54) **CABLE RETRACTION DEVICE**

(71) Applicant: Hangzhou Kingway Technology Co., Ltd., Hangzhou City, 311305 (CN)
(72) Inventor: Abele, Joachim, 65479 Raunheim (DE); Breuning, Edwin, 65479 Raunheim (DE); Lunge, Matthias, 65479 Raunheim (DE); Schiebold, Stefan, 65479 Raunheim (DE); Falasta, Stefan, 65479 Raunheim (DE); Rahmi, Aydemir, 65479 Raunheim (DE)
(74) Representative: Barker Brettell LLP

(57) **Abstract**

A cable retraction device (100) for a retractable or movable subsystem (300; 530) of a vehicle system (510), preferably a steering subsystem (300; 530), comprises a bendable drag structure (110) configured to support a cable harness (180, 180a, 180b) of the subsystem (530). The bendable drag structure (110) defines a bendable supporting surface (112, 112a - 112e) for the cable harness (180, 180a, 180b). Moreover, the supporting surface (112, 112a - 112e) comprises at least two sections (112a - 112e) which extend parallel to each other in a length direction of the bendable drag structure (110) and which at a given bending of the drag structure (110) have different radii of curvature (R1, R2).

## Description

The invention relates to a cable retraction device for a retractable or movable subsystem of a vehicle system, in particular a steering subsystem, and to a vehicle comprising such cable retraction device.

### Background

In a vehicle, retractable or movable subsystems are suited for increasing a driver's comfort, for example, in the form of adjustable sub-structures, such as adjustable passenger seats, a retractable steering column, adjustable control elements of the vehicle system, and the like. Retractable or movable subsystems are also suited for expanding a functionality of the vehicle system, for example, in the form of convertible subsystems, such as modifiable vehicle compartments, a convertible vehicle roof, retractable trailer hitch arrangements, and the like.

In cases in which a retractable or movable subsystem includes, or bears, one or more functionalities of the vehicle system which are operatively connected with other components of the vehicle system, a movability of the subsystem needs to comply with the requirement of safeguarding an operative connection between such functionalities and other components of the vehicle system. This applies, especially, where such functionalities are safety-relevant and/or where legal constraints pose an increased demand on safeguarding an operative connection across movable portions of a vehicle.

There exists a continuous need for improved techniques in connection with retractable or movable subsystems of a vehicle system.

### Summary of the Invention

The problem is solved by means of a cable retraction device according to claim 1, by means of a steering system according to claim 13, and by means of a vehicle according to claim 15.

According to a first aspect, a cable retraction device for a retractable or movable subsystem of a vehicle system, preferably a steering subsystem, is provided. The cable retraction device comprises a bendable drag structure configured to support a cable harness of the subsystem. The bendable drag structure defines a bendable supporting surface for the cable harness. The supporting surface comprises at least two sections which extend parallel to each other in a length direction of the bendable drag structure and which at a given bending of the drag structure have different radii of curvature.

By providing at least two sections of the supporting surface which have different radii of curvature, the cable retraction device facilitates accommodating in the cable retraction device a cable harness which comprises a plurality of cables, such as optical and/or electric cables, in particular, for complex and/or security-relevant functionalities of the vehicle system. This is achieved by enabling that different cables of the cable harness which have different thicknesses be supported, adjacent each other, by different ones of the at least two sections. In other words, different ones of the at least two sections can be configured to support one or more different cables of the cable harness which have different thicknesses, respectively.

By supporting cables having different thicknesses by different sections of the supporting surface, a tensile and/or compressive stress, which is exerted on the cables parallel to the length direction when a bending of the drag structure is changed, can be reduced. Thus, a risk of breakage of an operative connection through the cable harness, by breakage of one or more of the cable connections, in consequence of different or excessive tensile and/or compressive stress acting on the cables, is reduced.

Moreover, wear of the cables due to different tensile and/or compressive stress parallel to the length direction in the case of frequent changes of a bending of the bendable drag structure can be avoided or reduced. A durability and/or a reliability of the operative connection can thus be increased.

By reducing at least one of a tensile and/or compressive stress acting on the cables in the cable harness and a difference in such stress between different cables of the cable harness, a fixation of the cable harness relative to the length direction on the bendable drag structure at one or more positions over a length of the bendable drag structure is also facilitated. In this way, an occurrence of tensile and/or compressive stress being transmitted over larger portions of the cable harness, in particular on electric connections of the cable harness, can be reduced. This applies to situations in which a bending of the bendable drag structure is changed, and/or in which tensile and/or compressive stress acts on the cable harness as a result of thermomechanical expansion and/or contraction, in particular, under varying climatic or thermal conditions of the subsystem. A reliability of operative connections provided by the cable harness can thus be improved over large temperature ranges.

Any of the above effects is advantageous, in particular, in connection with complex and/or safety-relevant functionalities of the vehicle system which are included in, or borne by, the retractable or movable subsystem. This is, because such functionalities typically demand a high level of reliability and/or durability, over large temperature ranges, and they typically involve operative connections by cables having different thicknesses.

The at least two sections of the supporting surface may be provided for supporting different ones of at least two cables having different diameters among a plurality of cables of the cable harness. A difference between the radii of curvature of at least two sections of the supporting surface may correspond to a difference between the radii of at least two cables associated with the respective sections of the supporting surface and having different diameters among the plurality of cables of the cable harness. In this way, a difference in tensile and/or compressive stress between the at least two cables when a bending of the bendable drag structure is changed can be minimized.

In addition, or as an alternative, a difference between the radii of curvature of at least two sections of the supporting surface may correspond to a difference between the diameters of at least two cables associated with the respective sections of the supporting surface and having different diameters among the plurality of cables of the cable harness. In this way, a fixation of the cables relative to the length direction on the bendable drag structure by means of confining elements, in particular by means of holding pins, is facilitated.

In addition, or as an alternative, a difference between the radii of curvature of at least two sections of the supporting surface may correspond to an intermediate value which lies between a difference between the radii and a difference between the diameters of at least two cables associated with the respective sections of the supporting surface and having different diameters among the plurality of cables of the cable harness. In this way, a compromise between a reduced difference in tensile and/or compressive stress between the at least two cables when a bending of the bendable drag structure is changed and improved fixation of the cables relative to the length direction on the bendable drag structure by means of confining elements, in particular by means of holding pins, is facilitated.

The radius and/or the diameter of any of the at least two cables may correspond to an effective radius and/or an effective diameter of the respective cable in a region of the given bending of the drag structure, wherein the effective radius and/or the effective diameter are measured in a radial direction with respect to a center of the bending. This is advantageous, in particular, when the respective cable comprises elastic material, such as an elastic insulation, and when a tensile and/or a compressive force acting on at least a portion of the cable at the given bending causes elastic deformation of a cross-section of the cable at the bending. In this way, the aforesaid advantages regarding a reduction of tensile and/or compressive stress in the cable can be adapted to, in particular optimized for, an effective geometry of the cable at the bending. In connection with this, the radius of the cable may be defined as one-half of a height of the cross-section of the cable at the bending and/or the radius may be measured with respect to a height position within the cross-section of the cable which provides that a largest one of both a compressive force acting at an inward portion of the cable facing towards the center of the bending and a tensile force acting at an outward portion of the cable facing away from the center of the bending is minimized.

In addition, the radius and/or the diameter of any of the at least two cables, as defined in the foregoing, may be further defined with respect to a prevailing, a mean and/or an extreme temperature within a temperature range for which the cable retraction device is configured. For a use of the cable retraction device in a vehicle, the temperature range may be from -45°C to +95°C. In this way, tensile and/or compressive stress in the cable due to possible thermomechanical expansion and/or contraction of at least portions of the cable, which may affect the cross-section of the cable at the bending, can be further compensated. Additionally, in this way, a temperature-dependency of one or more elastic characteristics of the elastic material comprised by the cable, in particular, a dependency of an elasticity of the elastic material on varying climatic or thermal conditions of the subsystem, may be accounted for.

The difference between the radii of curvature of the at least two sections of the supporting surface may correspond to a difference between a height of each of the at least two sections with respect to a profile of the bendable supporting surface.

The drag structure may further comprise at least one separator contour configured to separate adjacent ones of the at least two sections of the supporting surface in a width direction of the drag structure. In this way, a risk of accidental misarrangement of one or more cables with respect to their corresponding section of the supporting surface, in particular, by vibration or by any other movement of the subsystem, is reduceable.

The drag structure may further comprise at least one bending limitation contour adapted to limit a bending of the drag structure. In this way, a risk of breakage of an operational connection provided through the cable harness, in consequence of excessive bending of the cable harness, is further reduceable.

The drag structure may further comprise at least one confining element configured to hold one or more cables of the cable harness in a proximity to the supporting surface. The at least one confining element may comprise at least one holding pin which is attachable to at least one pin connecting contour of the bendable drag structure. In this way, a risk of accidental misarrangement of one or more cables with respect to the supporting surface and/or its corresponding sections, in particular, by vibration or by any other movement of the subsystem, is further reduceable. The at least one confining element may further provide a fixation of one or more cables of the cable harness relative to the length direction of the bendable drag structure.

The bendable drag structure may comprise a drag chain having a plurality of drag chain links which are movably connected to each other, the plurality of drag chain links defining the supporting surface. The supporting surface can be at least partially defined as a geometric envelope of at least a portion of the plurality of drag chain links.

Any of the at least one separator contour, the at least one bending limitation contour, and/or the at least one confining element may be formed on one or more of the drag chain links. In particular, at least one separator contour, at least one bending limitation contour, and/or at least one confining element may be formed on each one of the plurality of drag chain links.

The cable retraction device may further comprise a plurality of drag structure mounts adapted to connect a stationary end of the drag structure to a stationary portion of the subsystem and to connect a retractable end of the drag structure to a retractable or movable portion of the subsystem.

The cable retraction device may further comprise at least one electric connector arranged at any of the drag structure mounts and configured to facilitate an electric connection between one or more cables of the cable harness and one or more external devices external to the cable retraction device.

The subsystem may be a steering subsystem. The bendable drag structure may be adapted to be arranged at least partially in a retractable steering column of the steering subsystem when a cable harness of the steering subsystem is supported by means of the drag structure.

The cable retraction device may further comprise a cable harness for the retractable or movable subsystem, wherein the cable harness is supported by means of the drag structure.

According to another aspect, a steering subsystem for a vehicle system is provided. The steering subsystem comprises a cable retraction device as provided herein, at least one stationary portion, a retractable steering column having at least one retractable portion, and a steering wheel arrangement attached to the at least one retractable portion of the steering column and comprising at least one operable steering wheel functionality. The cable harness is connected to the at least one operable steering wheel functionality for operatively connecting the at least one operable steering wheel functionality to a control unit of the vehicle.

The at least one operable steering wheel functionality may comprise a steering input detection functionality configured to detect a steering input provided by a user of the vehicle via the steering wheel arrangement. The supply unit may comprise a control unit configured to process a steering input signal received from the steering input detection functionality via the cable harness.

The at least one stationary portion of the steering system may comprise a stationary portion of the retractable steering column. The control unit of the vehicle may comprise a control unit of the steering system, which is arrangeable on the stationary portion, in particular in the stationary portion, of the retractable steering column.

According to another aspect, a vehicle is provided. The vehicle comprises a cable retraction device as provided herein and/or a steering system as provided herein.

### Brief Description of the Figures

Further details, advantages and objects of the invention become clear from the following detailed description and the drawings. There is shown in:
- Fig. 1: a cross section of a cable retraction device according to an example;
- Fig. 2: a cross section of a drag chain link according to an example;
- Fig. 3: a cut-away view of a retractable or movable subsystem according to an example;
- Fig. 4: a perspective view of the retractable or movable subsystem of Fig. 3, and
- Fig. 5: a vehicle according to an example.

### Detailed Description

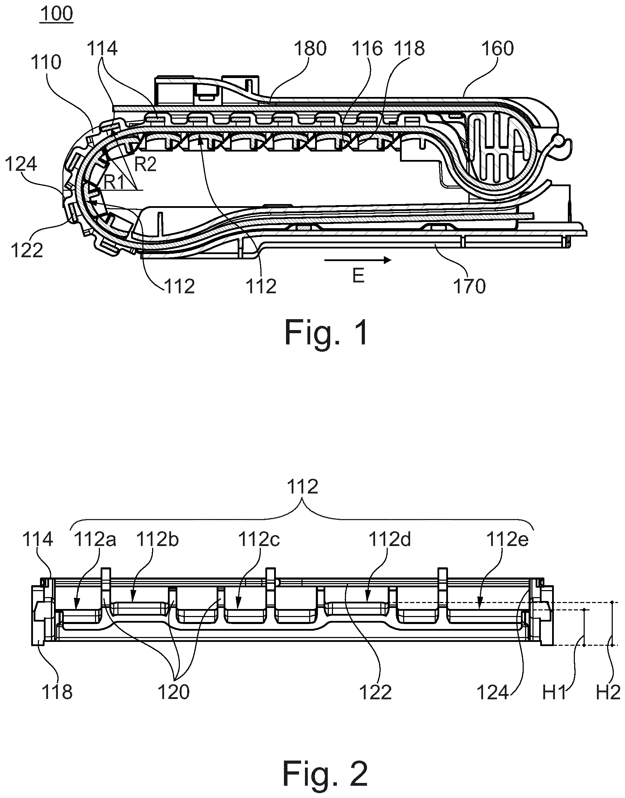

Fig. 1 shows a longitudinal cross-section of a cable retraction device 100, for example, for a retractable or movable subsystem of a vehicle system. The cable retraction device 100 comprises a stationary drag structure mount 160 and a retractable drag structure mount 170, which are movable relative to each other. As indicated by the arrow, the retractable drag structure mount 170 is movable parallel to an extraction direction E of the cable retraction device 100. Fig. 1 shows the cable retraction device 100 in a retracted position of the retractable drag structure mount 170. Between the stationary drag structure mount 160 and the retractable drag structure mount 170, a bendable drag structure 110 of the cable retraction device 100 extends. The bendable drag structure 110 defines a bendable supporting surface 112 on which a bendable cable harness 180 is arranged. The cable retraction device 100 is adapted to provide a flexible support for the cable harness 180 between a stationary portion of a retractable or movable subsystem of the vehicle system, to which the stationary drag structure mount 160 is mountable, and a retractable or movable portion of the subsystem, to which the retractable drag structure mount 170 is mountable.

In the shown example, the bendable drag structure 110 comprises a drag chain having a plurality of drag chain links 114. The drag chain links 114 are movably connected to each other and define the supporting surface 112. In other examples, the bendable drag structure 110 comprises a different type of a bendable structure, for example, a belt.

As discussed in more detail below, in connection with Fig. 2, the bendable drag structure 110 is formed to define multiple sections 112a - 112e of the supporting surface 112. The sections 112a - 112e are arranged alongside each other in a width direction of the bendable drag structure 110 and extend, essentially parallel to each other, in a length direction of the bendable drag structure 110. The multiple sections 112a - 112e of the supporting surface 112 are configured to exhibit different radii of curvature R1, R2 when the bendable drag structure 110 is bent at any given length. The multiple sections 112a - 112e of the supporting surface 112 are provided for supporting different ones among a plurality of cables contained in the cable harness 180. Sections of the supporting surface 112 which have different radii of curvature R1, R2 are provided for supporting cables of different thickness, or diameter, among the plurality of cables in the cable harness 180.

By arranging a cable having a larger thickness on a section of the supporting surface 112 which has a smaller radius of curvature R1, and a cable having a smaller thickness on a section of the supporting surface 112 which has a larger radius of curvature R2, a difference between the radii of curvature at the center of either cable is at least partially compensated. A relative movement between cables of different thicknesses in the length direction, when the bendable drag structure 110 is bent, as well as the occurrence of tensile and/or compressive stress acting differently on different cables in the length direction, are thereby reduced or avoided.

A difference between the radii of curvature R1, R2 of the multiple sections of the supporting surface 120 corresponds in some examples to a difference between the radii of the cables among the plurality of cables in the cable harness 180 which are arranged on the respective sections of the supporting surface 120. Furthermore, in some examples, the cables in the cable harness 180 are arranged adjacent each other on the supporting surface 120, i.e., with no cables incidentally crossing or overlaying each other.

The bendable drag structure 110 comprises bending limitation contours 116, 118, which are arranged pairwise on each of the drag chain links 114. The bending limitation contours 116, 118 of neighboring drag chain links 114 are configured to engage, when a predefined degree of bending of the bendable drag structure 110 is reached. In this situation, the bending limitation contours 116, 118 block the bendable drag structure 110 from bending further. In this way, a maximal bending stress, as well as a corresponding maximal tensile and/or compressive stress, which is exerted on the cable harness 180 when the bendable drag structure 110 is bent, can be limited. In addition, in this way, a trajectory of the bendable drag structure 110 when the retractable drag structure mount 170 is moved parallel to the extraction direction E is essentially controllable.

The bendable drag structure 110 further includes confining elements in the form of holding pins 122, which are attached to any of the drag chain links 114 by means of pin connecting contours 124 formed on each of the drag chain links 114. The holding pins 122 are provided to retain the cables of the cable harness 180 in a proximity to the supporting surface 112. This applies, especially, in a region where the bendable drag structure 110 is bent, since an intrinsic stiffness or elasticity of the cables may push some, or all, of the cables away from the supporting surface 112.

In the shown example, bending limitation contours 116, 118 and confining elements 122, 124 are provided on each of the drag chain links 114. In other examples, a bending limitation contour and/or a confining element is formed only on some of the drag chain links 114 or only at one or more selected positions over a length of the bendable drag structure 110.

Fig. 2 shows a cross-section of a drag chain link 114 of the bendable drag structure 110. As shown, the supporting surface 112 includes multiple sections 112a - 112e which are arranged adjacent each other in a width direction of the drag chain link 114. Different ones of the sections 112a - 112e have different heights H1, H2 with respect to the profile of the drag chain link 114. In the example, the sections 112a, 112c and 112e have a first height H1, and the sections 112b and 112d have a second height H2.

When the bendable drag structure 110 is bent about a center of curvature which lies beneath the drag chain link 114, the supporting surface 112 will have a larger radius of curvature in the sections 112b and 112d, whereas the supporting surface 112 will have a smaller radius of curvature in the sections 112a, 112c and 112e. The difference between the radii of curvature is in accordance with the difference between the heights H 1, H2.

As described in connection with Fig. 1, sections 112a, 112c and 112e are accordingly provided for supporting cables having a relatively larger thickness, or a larger diameter, among the cables in the cable harness 180. In contrast, sections 112 B and 112 D are provided for supporting cables having a relatively smaller thickness, or a smaller diameter.

At an upper surface of the drag chain link 114, separator contours 120 are arranged. The separator contours 120 serve for confining a lateral movement of any cables which are arranged on the supporting surface 112. In particular, the separator contours 120 serve for confining any incidental movement of a cable, for example, due to vibration or movement of the cable retraction device 100, within the respective section 112a - 112e of the supporting surface 112, to maintain the aforesaid functionality of the sections 112a - 112e for each cable.

The holding pins 122 extend over a full width of the supporting surface 112. In this way, cables arranged in any of the sections 112a - 112e are securely confined in their vertical motion to a proximity of the supporting surface 112. In some examples, at least some of the holding pins 122 additionally provide a fixation of at least some of the cables relative to a length direction of the bendable drag structure 110. In this way, the transmission of tensile and/or compressive stress over longer portions of the cable harness 180 is avoided.

In the shown example, bending limitation contours 118 are arranged at both lateral extremities of the drag chain link 114.

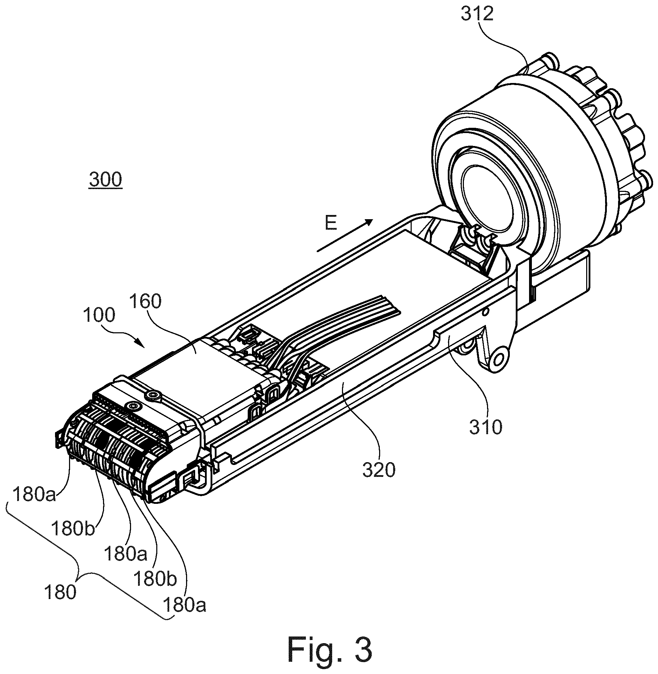

Fig. 3 shows a cutaway view of a retractable subsystem 300 for a vehicle system. In the shown example, the retractable subsystem 300 is a steering subsystem which includes a retractable steering column. The retractable steering column comprises a stationary portion 310 in which a retractable portion 320 of the steering column is slidably arranged. Fig. 3 shows the retractable subsystem 300 in a retracted position of the steering column. As indicated by the arrow, the retractable portion 320 can be moved to one or more extended positions of the retractable subsystem 300 by moving the retractable portion 320 relative to the stationary portion 310 parallel to the extension direction E, for example, to meet a driver's needs and/or preferences. At an end of the retractable portion 310 which faces towards the driver, parts of a steering wheel arrangement, including a bearing and a mounting plate 312 for the steering wheel, are arranged.

The retractable subsystem 300 includes a cable retraction device 100 as described in connection with Figs 1 and 2. For illustration purposes, an upper part of the stationary portion 310, which covers the cable retraction device 100 and to which the stationary drag structure mount 160 is mounted, has been cut away in Fig. 3. The cable retraction device 100 is adapted to provide a flexible operative connection between one or more steering wheel functionalities and one or more devices external to the subsystem 300, for example, a control unit and/or a battery of the vehicle system, via the cable harness 180.

A comparison with Fig. 2 shows that in the subsystem 300 cables 180a, which have a larger diameter, are arranged in sections 112a, 112c and 112e of the supporting surface 112 of the cable retraction device 100, as these sections define a smaller radius of curvature R1 of the supporting surface 112 of the bendable drag structure 110. Moreover, cables 180b, which have a smaller diameter, are arranged in sections 112b and 112d of the supporting surface 112, as these sections define a larger radius of curvature of the supporting surface 112 of the bendable drag structure 110.

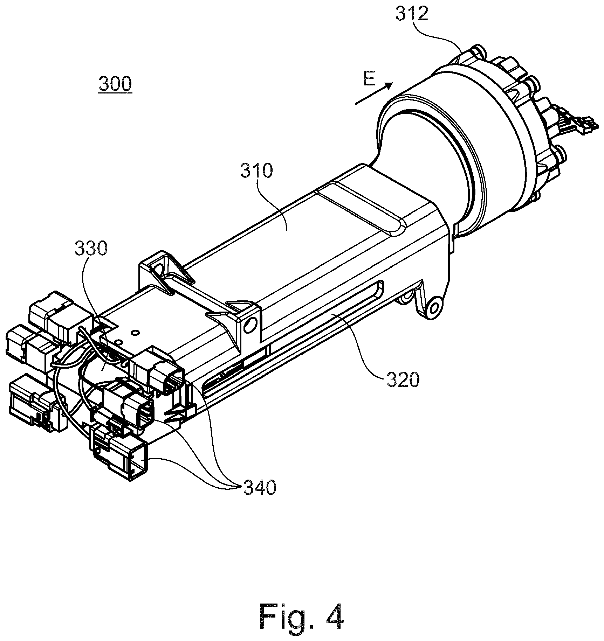

Fig. 4 shows a perspective view of the retractable subsystem 300. The cable retraction device 100 is arranged in the retractable steering column 310, 320. Moreover, the cable retraction device 100 is provided with electric connectors 340, which are arranged at the stationary drag structure mount 160 and which facilitate an electric connection between the cables 180a, 180b of the cable harness 180 and an external device, such as a battery and/or a control unit of the vehicle system.

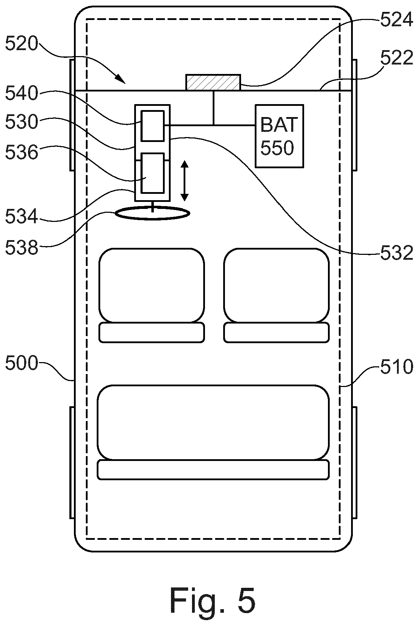

Fig. 5 shows schematically and exemplarily a vehicle 500. The vehicle 500 has a vehicle system 510, which may include any functional and/or controllable elements provided in the vehicle 500. The vehicle system 510 includes a steering system 520. The steering system 520 comprises a steering gear 522 acting on any steerable wheels of the vehicle 500. The steering gear 522 is operated by means of an electric actuator 524 which is powered by a battery 550 of the vehicle 500 and is controlled by means of a control unit 540 of the vehicle system 510. The control unit 540 is adapted to receive steering input signals which are indicative of a steering input provided by a driver of the vehicle 500 via a steering wheel arrangement 538 of the steering system 520. A steering input is sensorily detected, and transmitted to the control unit 540, by means of a steering input detection functionality of the steering wheel arrangement 538.

The steering system 520 includes a retractable steering subsystem 530, which has a retractable steering column, as described, for example, in connection with the retractable subsystem 300 in Figs. 3 and 4. The steering subsystem 530 comprises a stationary portion 532 and a retractable portion 534. As indicated by the double arrow, the retractable portion 534 can be moved relative to the stationary portion 532 parallel to an extraction direction of the steering subsystem 530. The steering subsystem 530 further includes a cable retraction device 536, for example, in accordance with the cable retraction device 100 as described above in connection with Figs. 1 to 4.

The steering wheel arrangement 538 is attached to the retractable portion 534 and includes operable steering wheel functionalities. The cable retraction device 536 provides a flexible operative connection between such steering wheel functionalities and at least one of the control unit 540 and the battery 550. One of the steering wheel functionalities is the steering input detection functionality, which is adapted to detect a steering input provided by the driver via a steering wheel of the steering wheel arrangement 538 and to transmit a corresponding steering input signal towards the control unit 540.

In the shown example, the control unit 540 is arranged on the stationary portion 532, for example, inside the stationary portion 532, of the retractable steering subsystem 530. In this context, the cable retraction devices 100, 536, as described herein, facilitate a compact arrangement of a control unit of the vehicle 500 in a steering subsystem 530.

The above examples have been described in the context of a retractable subsystem, in particular, a steering subsystem. It will be understood, nonetheless, that the same or similar advantages of the described cable retraction device are also achievable in connection with other types of retractable or movable subsystems of a vehicle system.

## Claims

1. Cable retraction device (100) for a retractable or movable subsystem (300; 530) of a vehicle system (510), preferably a steering subsystem (300; 530), the cable retraction device (100) comprising a bendable drag structure (110) configured to support a cable harness (180, 180a, 180b) of the subsystem (530), wherein the bendable drag structure (110) defines a bendable supporting surface (112, 112a - 112e) for the cable harness (180, 180a, 180b),
wherein the supporting surface (112, 112a - 112e) comprises at least two sections (112a-112e) which extend parallel to each other in a length direction of the bendable drag structure (110) and which at a given bending of the drag structure (110) have different radii of curvature (R1, R2).

2. Cable retraction device according to claim 1, wherein the at least two sections (112a - 112e) of the supporting surface (112, 112a - 112e) are provided for supporting different ones of at least two cables (180a, 180b) having different diameters among a plurality of cables (180a, 180b) of the cable harness (180, 180a, 180b).

3. Cable retraction device according to claim 2, wherein a difference between the radii of curvature (R1, R2) of the at least two sections (112a - 112e) of the supporting surface (112, 112a - 112e) corresponds to a difference between the radii of the at least two cables (180a, 180b) having different diameters among the plurality of cables (180a, 180b) of the cable harness (180, 180a, 180b).

4. Cable retraction device according to any one of the preceding claims, wherein the difference between the radii of curvature (R1, R2) of the at least two sections (112a - 112e) of the supporting surface (112, 112a - 112e) corresponds to a difference between a height (H1, H2) of each of the at least two sections (112a - 112e) with respect to a profile of the bendable supporting surface (112, 112a - 112e).

5. Cable retraction device according to any one of the preceding claims, wherein the drag structure (110) further comprises at least one separator contour (120) configured to separate adjacent ones of the at least two sections (112a - 112e) of the supporting surface (112, 112a - 112e) in a width direction of the drag structure (110).

6. Cable retraction device according to any one of the preceding claims, wherein the drag structure (110) further comprises at least one bending limitation contour (116, 118) adapted to limit a bending of the drag structure (110).

7. Cable retraction device according to any one of the preceding claims, wherein the drag structure (110) further comprises at least one confining element (122, 124) configured to hold one or more cables (180a, 180b) of the cable harness (180, 180a, 180b) in a proximity to the supporting surface (112, 112a - 112e), wherein, optionally, the at least one confining element (122, 124) comprises at least one holding pin (122) which is attachable to at least one pin connecting contour (124) of the bendable drag structure (110).

8. Cable retraction device according to any one of the preceding claims, wherein the bendable drag structure (110) comprises a drag chain (110) having a plurality of drag chain links (114) which are movably connected to each other, the plurality of drag chain links (114) defining the supporting surface (112, 112a - 112e).

9. Cable retraction device according to claim 8 in combination with any one of claims 5 to 7, wherein, respectively, the at least one separator contour (120), the at least one bending limitation contour (116, 118), and/or the at least one confining element (122, 124) is formed on one or more of the drag chain links (114).

10. Cable retraction device according to any one of the preceding claims, further comprising a plurality of drag structure mounts (160, 170) adapted to connect a stationary end of the drag structure (110) to a stationary portion (310; 532) of the subsystem (300; 530) and to connect a retractable end of the drag structure (110) to a retractable or movable portion (320; 534) of the subsystem (300; 530), wherein, optionally, the cable retraction device further comprises at least one electric connector (340) arranged at any of the drag structure mounts (160) and configured to facilitate an electric connection between one or more cables (180a, 180b) of the cable harness (180, 180a, 180b) and one or more external devices external to the cable retraction device (100).

11. Cable retraction device according to any one of the preceding claims, wherein the subsystem (300; 530) is a steering subsystem (300; 530), and the bendable drag structure (110) is adapted to be arranged at least partially in a retractable steering column (310, 320) of the steering subsystem (300; 530) when a cable harness (180, 180a, 180b) of the steering subsystem (300; 530) is supported by means of the drag structure (110).

12. Cable retraction device according to any one of the preceding claims, further comprising a cable harness (180, 180a, 180b) for the retractable or movable subsystem (300; 530), wherein the cable harness (180, 180a, 180b) is supported by means of the drag structure (110).

13. Steering subsystem (300; 530) for a vehicle system (510) of a vehicle (500), the steering subsystem (300; 530) comprising:
- a cable retraction device according to claim 12,
- at least one stationary portion (310; 532),
- a retractable steering column (310, 320; 530) having at least one retractable portion (320; 534), and
- a steering wheel arrangement (312; 538) attached to the at least one retractable portion (320; 534) of the steering column (310, 320; 530) and comprising at least one operable steering wheel functionality,
wherein the cable harness (180, 180a, 180b) is connected to the at least one operable steering wheel functionality for operatively connecting the at least one operable steering wheel functionality to a control unit (540) of the vehicle (500).

14. Steering subsystem according to claim 13, wherein the at least one stationary portion (310; 532) of the steering subsystem (300; 530) comprises a stationary portion (310; 532) of the retractable steering column (310, 320; 530), and the control unit (540) of the vehicle (500) comprises a control unit (540) of a steering system (520) of the vehicle (500), the control unit (540) arrangeable on the stationary portion (310; 532), in particular in the stationary portion (310; 532), of the retractable steering column (310, 320; 530).

15. Vehicle (500) comprising a cable retraction device according to any one of claims 1 to 12 and/or a steering subsystem according to claim 13 or claim 14.

## Amended claims

### Amended claims in accordance with Rule 137(2) EPC.

1. Cable retraction device (100) for a retractable or movable subsystem (300; 530) of a vehicle system (510), preferably a steering subsystem (300; 530), the cable retraction device (100) comprising a bendable drag structure (110) configured to support a cable harness (180, 180a, 180b) of the subsystem (530), wherein the bendable drag structure (110) defines a bendable supporting surface (112, 112a - 112e) for the cable harness (180, 180a, 180b),
wherein the supporting surface (112, 112a - 112e) comprises at least two sections (112a - 112e) which extend parallel to each other in a length direction of the bendable drag structure (110) and which at a given bending of the drag structure (110) have different radii of curvature (R1, R2);
wherein a cable having a larger thickness is arranged on the section of the supporting surface (112, 112a - 112e) which has a smaller radius of curvature (R1), and a cable having a smaller thickness is arranged on the section of the supporting surface (112, 112a - 112e) which has a larger radius of curvature (R2).

2. Cable retraction device according to claim 1, wherein the at least two sections (112a - 112e) of the supporting surface (112, 112a - 112e) are provided for supporting different ones of at least two cables (180a, 180b) having different diameters among a plurality of cables (180a, 180b) of the cable harness (180, 180a, 180b).

3. Cable retraction device according to claim 2, wherein a difference between the radii of curvature (R1, R2) of the at least two sections (112a - 112e) of the supporting surface (112, 112a - 112e) corresponds to a difference between the radii of the at least two cables (180a, 180b) having different diameters among the plurality of cables (180a, 180b) of the cable harness (180, 180a, 180b).

4. Cable retraction device according to any one of the preceding claims, wherein the difference between the radii of curvature (R1, R2) of the at least two sections (112a - 112e) of the supporting surface (112, 112a- 112e) corresponds to a difference between a height (H1, H2) of each of the at least two sections (112a - 112e) with respect to a profile of the bendable supporting surface (112, 112a - 112e).

5. Cable retraction device according to any one of the preceding claims, wherein the drag structure (110) further comprises at least one separator contour (120) configured to separate adjacent ones of the at least two sections (112a - 112e) of the supporting surface (112, 112a - 112e) in a width direction of the drag structure (110).

6. Cable retraction device according to any one of the preceding claims, wherein the drag structure (110) further comprises at least one bending limitation contour (116, 118) adapted to limit a bending of the drag structure (110).

7. Cable retraction device according to any one of the preceding claims, wherein the drag structure (110) further comprises at least one confining element (122, 124) configured to hold one or more cables (180a, 180b) of the cable harness (180, 180a, 180b) in a proximity to the supporting surface (112, 112a - 112e), wherein, optionally, the at least one confining element (122, 124) comprises at least one holding pin (122) which is attachable to at least one pin connecting contour (124) of the bendable drag structure (110).

8. Cable retraction device according to any one of the preceding claims, wherein the bendable drag structure (110) comprises a drag chain (110) having a plurality of drag chain links (114) which are movably connected to each other, the plurality of drag chain links (114) defining the supporting surface (112, 112a - 112e).

9. Cable retraction device according to claim 8 in combination with any one of claims 5 to 7, wherein, respectively, the at least one separator contour (120), the at least one bending limitation contour (116, 118), and/or the at least one confining element (122, 124) is formed on one or more of the drag chain links (114).

10. Cable retraction device according to any one of the preceding claims, further comprising a plurality of drag structure mounts (160, 170) adapted to connect a stationary end of the drag structure (110) to a stationary portion (310; 532) of the subsystem (300; 530) and to connect a retractable end of the drag structure (110) to a retractable or movable portion (320; 534) of the subsystem (300; 530), wherein, optionally, the cable retraction device further comprises at least one electric connector (340) arranged at any of the drag structure mounts (160) and configured to facilitate an electric connection between one or more cables (180a, 180b) of the cable harness (180, 180a, 180b) and one or more external devices external to the cable retraction device (100).

11. Cable retraction device according to any one of the preceding claims, wherein the subsystem (300; 530) is a steering subsystem (300; 530), and the bendable drag structure (110) is adapted to be arranged at least partially in a retractable steering column (310, 320) of the steering subsystem (300; 530) when a cable harness (180, 180a, 180b) of the steering subsystem (300; 530) is supported by means of the drag structure (110).

12. Cable retraction device according to any one of the preceding claims, further comprising a cable harness (180, 180a, 180b) for the retractable or movable subsystem (300; 530), wherein the cable harness (180, 180a, 180b) is supported by means of the drag structure (110).

13. Steering subsystem (300; 530) for a vehicle system (510) of a vehicle (500), the steering subsystem (300; 530) comprising:
- a cable retraction device according to claim 12,
- at least one stationary portion (310; 532),
- a retractable steering column (310, 320; 530) having at least one retractable portion (320; 534), and
- a steering wheel arrangement (312; 538) attached to the at least one retractable portion (320; 534) of the steering column (310, 320; 530) and comprising at least one operable steering wheel functionality,
wherein the cable harness (180, 180a, 180b) is connected to the at least one operable steering wheel functionality for operatively connecting the at least one operable steering wheel functionality to a control unit (540) of the vehicle (500).

14. Steering subsystem according to claim 13, wherein the at least one stationary portion (310; 532) of the steering subsystem (300; 530) comprises a stationary portion (310; 532) of the retractable steering column (310, 320; 530), and the control unit (540) of the vehicle (500) comprises a control unit (540) of a steering system (520) of the vehicle (500), the control unit (540) arrangeable on the stationary portion (310; 532), in particular in the stationary portion (310; 532), of the retractable steering column (310, 320; 530).

15. Vehicle (500) comprising a cable retraction device according to any one of claims 1 to 12 and/or a steering subsystem according to claim 13 or claim 14.
